# EUROPÄISCHE PATENTSCHRIFT

(11) **EP 3 149 369 B1**
(45) Veröffentlichungstag und Bekanntmachung des Hinweises auf die Patenterteilung: **10.07.2019**
(21) Anmeldenummer: 15727340.0
(22) Anmeldetag: 27.05.2015
(51) Int. Cl.: F16K 11/078, F16K 17/38

(54) **STEUERKARTUSCHE AUSGEBILDET ALS VERBRÜHSCHUTZVENTIL**
CONTROL CARTRIDGE DESIGNED AS SCALDING PROTECTION VALVE
CARTOUCHE DE COMMANDE RÉALISÉE SOUS LA FORME D'UNE VANNE ANTI-BRÛLURE

(30) Priorität: 27.05.2014 DE 102014007676
(43) Veröffentlichungstag der Anmeldung: 05.04.2017
(73) Patentinhaber: CeramTec GmbH, 73207 Plochingen (DE)
(72) Erfinder: LEINEN, Josef, 54516 Wittlich (DE)
(74) Vertreter: Fehrenbacher, Eckhard Anton
(86) Internationale Anmeldenummer: PCT/EP2015/061715
(87) Internationale Veröffentlichungsnummer: WO 2015/181237

(56) Entgegenhaltungen:
- DE-A1- 3 108 419
- DE-A1- 4 423 854
- US-A- 5 141 153

## Beschreibung

Die Erfindung betrifft eine Steuerkartusche für Einhebelmischbatterien mit einem Gehäuse, in dem eine keramische Grundscheibe und eine auf der Grundscheibe aufliegende verdreh- und verschiebbare keramische Steuerscheibe angeordnet ist, wobei in der Grundscheibe jeweils ein Zulauf für das Kalt- bzw. Warmwasser und ein Auslauf für das Mischwasser angeordnet ist und das Mischwasser im Gehäuse umgelenkt wird und über den Auslauf in der Grundscheibe die Steuerkartusche verlässt und wobei zumindest ein Formgedächtnislegierungs-Element, auch als FGL-Element bezeichnet, in Form eines FGL-Bleches oder eines FGL-Drahtes vorgesehen ist, welches im Betrieb der Steuerkartusche die Temperatur des Mischwassers annimmt und sich bei Erreichen einer bestimmten Temperatur des Mischwassers ausdehnt.

In herkömmlichen Einhebelmischbatterien werden fast ausschließlich Ventile mit keramischen Dichtscheiben (Grundscheibe und Steuerscheibe) eingesetzt. Diese Ventile werden in der Sanitärarmaturenbranche Kartuschen oder Steuerkartuschen genannt. Diese Steuerkartuschen zeichnen sich fast alle dadurch aus, dass in einem Gehäuse keramische Dichtscheiben enthalten sind.

Eine Steuerkartusche für Einhebelmischbatterien nach dem Oberbegriff des Anspruchs 1 ist aus der EP-A-0 691 494 bekannt. Eine spezielle Ausführungsform zeigt, dass das FGL-Element, hier ein Draht aus Federstahl, auf der Steuerscheibe angeordnet ist, jedoch nicht unmittelbar. Das FGL-Element verschiebt bei Erreichen einer bestimmten Mischwassertemperatur die Steuerscheibe automatisch in eine Schliessstellung. Das FGL-Element stützt sich einerseits mittelbar über das Steuerelement an der Steuerscheibe und andererseits mittelbar über den Stössel am Gehäuse ab.

Der Erfindung liegt die Aufgabe zugrunde, ein Steuerkartusche so zu verändern, dass ein automatischer Verbrühschutz integriert ist, d.h. dass bei einer definierten Temperatur des Mischwassers die Steuerkartusche automatisch schließt.

Erfindungsgemäß wird diese Aufgabe durch eine Steuerkartusche nach dem Anspruch 1 gelöst.

Dadurch, dass das FGL-Element unmittelbar auf der Steuerscheibe angeordnet ist und bei Erreichen der bestimmten Temperatur des Mischwassers automatisch die Steuerscheibe in eine Schließstellung, d.h. in Richtung ihrer Symmetrieachse verschiebt, bei der kein Wasser in den Auslauf gelangt, und dass das FGL-Element sich einerseits unmittelbar an der Steuerscheibe und andererseits unmittelbar am Gehäuse abstützt, ist ein automatischer Verbrühschutz integriert, der bei einer definierten Temperatur des Mischwasssers die Steuerkartusche automatisch schließt. Wenn das Mischwasser eine Verbrühtemperatur aufweist, bei der sich ein Benutzer verbrühen würde, dehnt sich das FGL-Element aus und schiebt dabei die Steuerscheibe in ihre Schließstellung. Erfindungsgemäß ist die Steuerscheibe komplett vom Mischwasser umströmt, wenn die Steuerkartusche sich in einer Offenstellung befindet.

Unter einem FGL-Element wird ein Bauteil aus einer Formgedächtnislegierung verstanden. Eine Formgedächtnislegierung besteht zum Beispiel aus folgenden Werkstoffen: NiTi, CuZnAl, CuAlNi, FeMnSi oder FeNiCoTi. Während die meisten Metalle immer dieselbe Kristallstruktur bis zu ihrem Schmelzpunkt besitzen, haben Formgedächtnislegierungen, abhängig von der Temperatur, zwei unterschiedliche Strukturen (Phasen). Formgedächtnislegierungen (Abkürzung FGL, englisch shape memory alloy, Abkürzung SMA) sind also spezielle Metalle, die in zwei unterschiedlichen Kristallstrukturen existieren können. Sie werden oft auch als Memorymetalle bezeichnet. Dies rührt von dem Phänomen her, dass sie sich an eine frühere Formgebung trotz nachfolgender starker Verformung scheinbar "erinnern" können.

Bevorzugt ist das FGL-Element ein FGL-Blech oder ein FGL-Draht ist. Bleche oder Drähte sind so herzustellen, dass sie wenig Platz in der Steuerkartusche beanspruchen.

In bevorzugter Ausführung werden ausschließlich FGL-Elemente verwendet, die sich bei Erreichen der Verbrühtemperatur mit einer Kraft von mindestens 50 N ausdehnen. Es hat sich unerwartet gezeigt, dass diese geringe Kraft bei den derzeit üblichen Steuerkartuschen zum Verschieben der Steuerscheibe ausreicht.

Bevorzugt werden zwei oder mehrere FGL-Elemente verwendet. Die Kraft auf die Steuerscheibe kann dadurch erhöht werden.

Nachfolgend wird die Erfindung anhand von 8 Figuren weiter erläutert. Alle Figuren zeigen eine identische Ausgestaltung einer erfindungsgemäßen Steuerkartusche in verschiedenen Stellungen.

Das Ventil bzw. die Steuerkartusche mit Verbrühschutz ist vorteilhaft wie folgt aufgebaut:

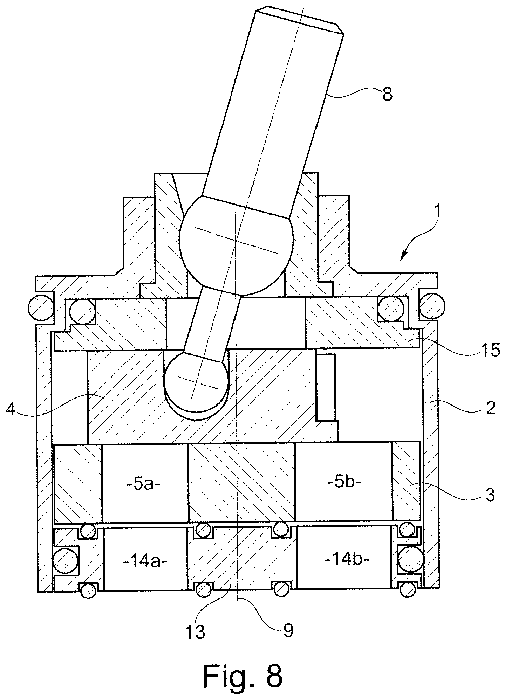

Figur 8 zeigt eine erfindungsgemäße Steuerkartusche 1. In einem zylindrischen Gehäuse 2 aus Kunststoff befindet sich eine Grundscheibe 3 aus Keramik, die zu der Zylinderwand des Gehäuses 2 abgedichtet ist. In der Grundscheibe 3 befinden sich drei Bohrungen, eine für den Zulauf kalt 5a, eine für den Zulauf warm 5b und eine Bohrung als Auslauf 6 für das Mischwasser. Die Grundscheibe 3 ist gegenüber dem zylindrischen Gehäuse 2 gegen Verdrehung gesichert. Somit bilden das Gehäuse 2 und die Grundscheibe 3 eine Einheit, ähnlich einem zylindrischen Topf. Die beiden Zuläufe 5a, 5b sind wasserdicht über einen Armaturenkörper (nicht gezeigt) an das Wasserversorgungsnetz angeschlossen. Die Mischwasserbohrung, bzw. der Auslauf 6 ist an eine Armatur angeschlossen, zum Beispiel an den Auslauf einer Brausearmatur.

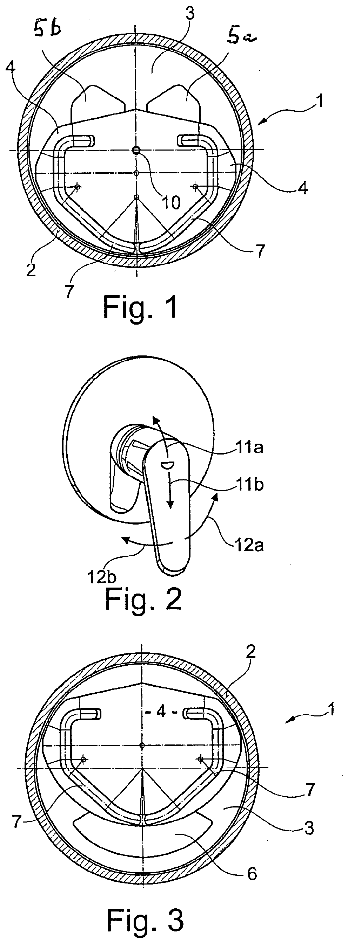

Über der Grundscheibe 3 liegt eine weitere Scheibe aus Keramik, die Steuerscheibe 4. Diese Steuerscheibe 4 kann sowohl translatorisch als auch rotatorisch mit dem Pivot 8 bewegt werden. Die Steuerscheibe 4 kann um die Mittelachse 9 des zylindrischen Gehäuses 2 um einen Winkel nach links bzw. nach rechts gedreht werden (Drehpunkt 9). Des Weiteren kann die Steuerscheibe 4 translatorisch in Richtung ihrer Symmetrieachse verschoben werden. In der skizzierten Version (siehe Figur 1) sind es 5 mm. Die Steuerscheibe 4 vergrößert bzw. verkleinert durch ihre translatorische bzw. rotatorische Bewegung die Querschnitte der Zuläufe 5a, 5b bzw. deren Zulaufbohrungen. In Figur 1 ist dieses Ventil in der Position voll geöffnet, schematisch dargestellt. Die Zuläufe warm und kalt 5a, 5b sind größtmöglich geöffnet, so dass in dieser Position der höchste Volumenstrom entsteht. In den Figuren 1, 3, 4, 5, 6 ist jeweils ein Schnitt senkrecht zur Mittelachse 9 (siehe Figur 8) der Steuerkartusche gezeigt, bzw. eine Ansicht von oben auf die Steuerscheibe 4.

Diese Bewegungen sind allgemein bekannt durch die Bedienung einer Einhebelmischbatterie in Bad oder Küche. Durch die auf/zu Bewegung am Griff wird die Steuerscheibe translatorisch bewegt und durch eine Drehbewegung rotatorisch. In Figur 2 sind diese Bewegungen exemplarisch an einer Brausearmatur dargestellt. Die Pfeile 11a, 11b markieren die Stellungen auf und zu und die Pfeile 12a, 12b kalt und warm. Das gleiche gilt für alle anderen Einhebelmischbatterien zum Beispiel in der Küche oder auf dem Waschtisch.

In die Steuerscheibe 4 (siehe Figur 3) sind erfindungsgemäß zwei FGL-Elemente 7a, 7b (FGL = Formgedächtnislegierung) formschlüssig eingelegt. Die FGL-Elemente 7a, 7b bestehen aus einer Formgedächtnislegierung (Nickel-TitanLegierung) und haben die Eigenschaft sich bei einer bestimmten und definierbaren Temperatur zu verformen. Diese FGL-Elemente 7a, 7b sollen im Alltagsbetrieb keine Funktion haben, sie machen die Bewegungen der Steuerscheibe 4 mit und werden bei geöffnetem Ventil ständig mit Mischwasser umströmt.

In bevorzugter Ausgestaltung sind diese FGL-Elemente 7a, 7b Bleche oder Drähte.

In Figur 3 ist das Ventil in geschlossener Position dargestellt. Die Zuläufe 5a, 5b bzw. deren Zulaufbohrungen sind jetzt durch die Steuerscheibe 4 verdeckt. Im Gehäuse 2 steht Wasser (und auch an den FGL-Elementen 7a, 7b) das Umgebungstemperatur annimmt, bzw. schon angenommen hat, wenn das Ventil schon längere Zeit verschlossen ist.

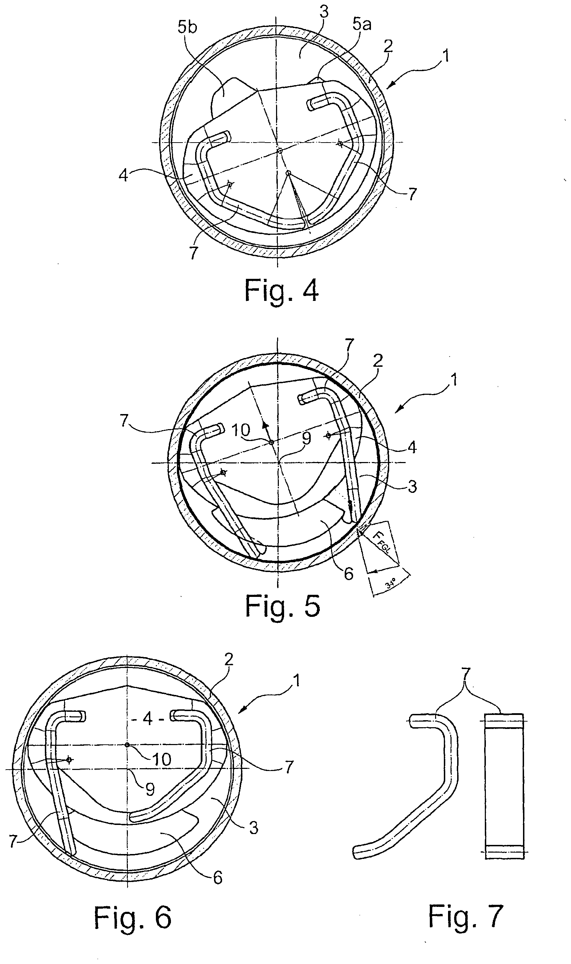

Figur 4 zeigt eine Ventilstellung wie sie typischerweise für das Duschen oder Händewaschen sein kann. Das Ventil ist zu ¾ geöffnet und um 20° in Warmstellung gedreht. Die Temperatur des Mischwassers beträgt jetzt angenehme 38°C. Diese und unendlich viele Zwischenstellungen finden während des Produktlebenszyklusses statt. Schätzungen gehen von 4 bis 6 Millionen Bewegungen aus. Bei Tests der Anmelderin auf ihren Lebensdauerprüfständen werden 500.000 Lastwechsel geprüft, was etwa 4,5 Mio einzelnen Bewegungen entspricht.

Wird die Kaltwasserzufuhr gedrosselt, oder fällt gar ganz aus, kann die Mischwassertemperatur auf Werte ansteigen die ein Verbrühen des Bedieners zur Folge hat. Jetzt (und nur jetzt!) sollen die FGL-Elemente 7a, 7b ihre Arbeit leisten. Ab einer bestimmten Temperatur des Mischwassers (z.B. 46°C) sollen die FGL-Elemente 7a, 7b eine Form annehmen wie sie in Figur 5 dargestellt ist. Durch die Verformung der FGL-Elemente 7a, 7b wird die Steuerscheibe 4 in Richtung ihrer Symmetrieachse verschoben. (siehe Pfeilrichtung in Figur 5). Jetzt ist das Ventil geschlossen und verhindert eine weitere Zufuhr sowohl von Kaltwasser als auch von Warmwasser.

Dabei sind voraussichtlich Reibkräfte zwischen Grundscheibe 3 und Steuerscheibe 4 und der nicht dargestellten Hebelmechanik von ca. 80 N zu erwarten. Diese Kraft müssen die FGL-Elemente 7a, 7b aufbringen. Dabei ist zu bedenken, dass ein Teil der Kraft für Reibung zwischen FGL-Elemente 7a, 7b und Gehäuse 2 "verloren" geht. Des Weiteren werden gegen Ende der Transformation nur 83% der Kraft in Translationsrichtung geleitet (cos 34°, siehe Figur 5). Zu Beginn der Translation sind es nahezu 100%, was der Performance des Transformationsvorganges sicherlich entgegen kommt. Zu Beginn der Transformation schnell und stark, gegen Ende etwas langsamer und schwächer. Werden all diese Umstände berücksichtigt kommt man zu dem Schluss, dass jedes der beiden FGL-Elemente 7a, 7b mindestens 50 N aufbringen muss.

Diese Kraft ist stark abhängig von der Normalkraft der Gleitpaarung und/oder des tribologischen Systems Keramik/Keramik. Die Hebelmechanik hat nur einen geringen Einfluss, da hier Gleitpaarungen mit extrem niedrigem Reibbeiwert gewählt werden. Die Kraft ist normalerweise konstruktiv beeinflussbar, das ist in dem hier beschrieben System aber nur noch bedingt der Fall, da das ganze System auf Volumenstrom und hydraulische Funktion optimiert wurde und somit die Normalkraft kaum noch beeinflussbar ist. Lediglich über den Reibbeiwert sind noch Optimierungen vorstellbar. Ferner ist zu bedenken, dass die Kraft bei vergleichbaren Systemen über die Zeit zunimmt, weil sich das tribologische System verschlechtert.

Dies gilt insbesonders für dieses System, da es sich hierbei um ein sogenanntes "offenes System" handelt, bei dem die Steuerscheibe 4 komplett von Wasser umströmt wird. Deswegen müssen entsprechende Reserven berücksichtigt werden, damit das System auch noch unter diesen Bedingungen funktioniert.

Der Transformationsvorgang sollte möglichst schnell und möglichst ohne weitere Steigerung der Temperatur ablaufen. 1 bis 2 Sekunden sind akzeptabel.

Die Rückstellung der FGL-Elemente 7a, 7b bzw. der FGL-Bleche wird mechanisch über den Griff der Armatur erfolgen (Figur 2). Eine selbstständige Rückverformung der FGL-Elemente 7a, 7b nach Abkühlung des Wassers ist vorteilhaft.

Figur 6 zeigt rechts die FGL-Elemente 7a, 7b im Normalzustand und links im verformten Zustand, sowie Figur 7 eine Skizze eines der FGL-Elemente 7a, 7b, welches hier als Blech ausgebildet ist im unverformten Zustand in zwei Ansichten.

Figur 8 (siehe auch die Beschreibung weiter oben) zeigt eine erfindungsgemäße Steuerkartusche 1 in einem zylindrischen Gehäuse 2 aus Kunststoff. In dem Gehäuse 2 ist ein Boden 13 mit einem Zulauf 14b für Warmwasser und einem Zulauf 14a für Kaltwasser angeordnet sowie ein Mischwasserauslauf (in Figur 8 nicht zu sehen). Über dem Boden 13 befindet sich eine Grundscheibe 3 aus Keramik In der Grundscheibe 3 befinden sich drei Bohrungen, eine für den Zulauf kalt 5a, eine für den Zulauf warm 5b und eine Bohrung für das Mischwasser. Die Grundscheibe 3 ist gegenüber dem zylindrischen Gehäuse 2 gegen Verdrehung gesichert. Somit bilden das Gehäuse 2 und die Grundscheibe 3 eine Einheit, ähnlich einem zylindrischen Topf. Die beiden Zuläufe 5a, 5b sind über die Zuläufe 14a, 14b wasserdicht über einen Armaturenkörper an das Wasserversorgungsnetz angeschlossen. Die Mischwasserbohrung ist an den Auslauf einer Armatur angeschlossen, zum Beispiel an den Auslauf einer Brausearmatur.

Über der Grundscheibe 3 liegt eine weitere Scheibe aus Keramik, die Steuerscheibe 4. Auf dieser Steuerscheibe sind die FGL-Elemente 7a, 7b angeordnet, die bei Beaufschlagung mit heißem Wasser die Steuerscheibe 4 in Schließrichtung verschieben, so lange bis die Steuerkartusche 1 geschlossen ist. Abgedeckt wird die Steuerscheibe durch eine Lagerscheibe 15 aus Keramik.

## Patentansprüche

1. Steuerkartusche (1) für Einhebelmischbatterien mit einem Gehäuse (2), in dem eine keramische Grundscheibe (3) und eine auf der Grundscheibe (3) aufliegende verdreh- und verschiebbare keramische Steuerscheibe (4) angeordnet ist, wobei in der Grundscheibe (3) jeweils ein Zulauf (5a, 5b) für das Kalt- bzw. Warmwasser und ein Auslauf (6) für das Mischwasser angeordnet ist und das Mischwasser im Gehäuse (2) umgelenkt wird und über den Auslauf (6) in der Grundscheibe (3) die Steuerkartusche (1) verlässt und wobei zumindest ein Formgedächtnislegierungs-Element (7), auch als FGL-Element bezeichnet, in Form eines FGL-Bleches oder eines FGL-Drahtes vorgesehen ist, welches im Betrieb der Steuerkartusche (1) die Temperatur des Mischwassers annimmt und sich bei Erreichen einer bestimmten Temperatur des Mischwassers ausdehnt, **dadurch gekennzeichnet, dass** das FGL-Element (7) unmittelbar auf der Steuerscheibe (4) angeordnet ist und bei Erreichen der bestimmten Temperatur des Mischwassers automatisch die Steuerscheibe (4) in eine Schließstellung, d.h. in Richtung ihrer Symmetrieachse verschiebt, bei der kein Wasser in den Auslauf (6) gelangt, und dass das FGL-Element (7) sich einerseits unmittelbar an der Steuerscheibe (4) und andererseits unmittelbar am Gehäuse (2) abstützt.

2. Steuerkartusche nach Anspruch 1, **dadurch gekennzeichnet, dass** das FGL-Element (7) auf der der Grundscheibe (3) abgewandten Seite der Steuerscheibe (4) angeordnet ist.

3. Steuerkartusche nach Anspruch 1 oder 2, **dadurch gekennzeichnet, dass** zwei oder mehrere, bevorzugt identische, FGL-Elemente (7) verwendet werden.

## Claims

1. Control cartridge (1) for single-lever mixer taps that has a housing (2) in which a ceramic base disc (3) and a rotatable, movable ceramic control disc (4) resting on the base disc (3) is arranged, an inlet (5a, 5b) for the cold and hot water, respectively, and an outlet (6) for the mixed water being arranged in the base disc (3) and the mixed water being deflected in the housing (2) and leaving the control cartridge (1) through the outlet (6) in the base disc (3) and at least one shape-memory alloy element (7), also referred to as an SMA element, being provided in the form of an SMA sheet or an SMA wire, which element assumes the temperature of the mixed water while the control cartridge (1) is in operation and expands upon reaching a certain temperature of the mixed water, **characterized in that** the SMA element (7) is arranged directly on the control disc (4) and, upon reaching the certain temperature of the mixed water, automatically moves the control disc (4) into a closed position, i.e. in the direction of its axis of symmetry, in which position water does not enter the outlet (6), and **in that** the SMA element (7) is supported on one side directly on the control disc (4) and on the other side directly on the housing (2).

2. Control cartridge according to claim 1, **characterized in that** the SMA element (7) is arranged on the side of the control disc (4) that faces away from the base disc (3).

3. Control cartridge according to either of claims 1 or 2, **characterized in that** two or more, preferably identical, SMA elements (7) are used.

## Revendications

1. Cartouche de commande (1) pour robinet mélangeur à levier unique, comprenant un boîtier (2), dans lequel sont disposés un disque de base (3) en céramique et un disque de commande (4) en céramique rotatif et amovible reposant sur le disque de base (3), dans laquelleune entrée (5a, 5b) pour l'eau froide ou chaude et une sortie (6) pour l'eau mélangée étant disposées chacune dans le disque de base (3), et l'eau mélangée étant déviée dans le boîtier (2) et quittant la cartouche de commande (1) par la sortie (6) dans le disque de base (3), et au moins un élément (7) en alliage à mémoire de forme, également appelé élément AMF, étant prévu sous la forme d'une feuille AMF ou d'un fil AMF qui, pendant le fonctionnement de la cartouche de commande (1), adopte la température de l'eau mélangée et se dilate lorsque l'eau mélangée atteint une certaine température, **caractérisée en ce que** l'élément AMF (7) est disposé directement sur le disque de commande (4) et, lorsque l'eau mélangée atteint la température déterminée, déplace le disque de commande (4) automatiquement en position fermée, c'est-à-dire dans la direction de son axe de symétrie, dans laquelle aucune eau ne pénètre dans la sortie (6), et **en ce que** l'élément AMF (7) prend appui, d'une part, directement sur le disque de commande (4) et, d'autre part, directement sur le boîtier (2).

2. Cartouche de commande selon la revendication 1, **caractérisée en ce que** l'élément AMF (7) est disposé sur le côté du disque de commande (4) opposé au disque de base (3).

3. Cartouche de commande selon la revendication 1 ou 2, **caractérisée en ce que** deux ou plusieurs éléments AMF (7), de préférence identiques, sont utilisés.
